(19) Europäisches Patentamt
European Patent Office
Office européen des brevets

(11) Publication number: **0 545 439 A1**

# (12) EUROPEAN PATENT APPLICATION

(21) Application number: **92120753.6**

(22) Date of filing: **04.12.92**

(51) Int. Cl.[5]: **G03C 1/795**, C08G 63/68, C08G 63/66

(30) Priority: **05.12.91 JP 348903/91**

(43) Date of publication of application: **09.06.93 Bulletin 93/23**

(84) Designated Contracting States: **BE DE FR GB IT NL**

(71) Applicant: **KONICA CORPORATION**
**26-2, Nishi-shinjuku 1-chome Shinjuku-ku**
**Tokyo(JP)**

(72) Inventor: **Kobayashi, Hideyuki, c/o Konica Corporation**
**1, Sakuramachi**
**Hino-shi, Tokyo(JP)**
Inventor: **Araki, Hiromitsu, c/o Konica Corporation**
**1, Sakuramachi**
**Hino-shi, Tokyo(JP)**
Inventor: **Yajima, Takatoshi, c/o Konica Corporation**
**1, Sakuramachi**
**Hino-shi, Tokyo(JP)**
Inventor: **Naito, Hiroshi**
**c/o Kanebo, Ltd., 4-1, Kanebo-cho**
**Hohfu-shi, Yamaguchi-ken(JP)**
Inventor: **Okubo, Yoshioki**
**c/o Kanebo, Ltd., 4-1, Kanebo-cho**
**Hohfu-shi, Yamaguchi-ken(JP)**

(74) Representative: **Henkel, Feiler, Hänzel & Partner**
**Möhlstrasse 37**
**W-8000 München 80 (DE)**

## (54) Support for photographic material and light-sensitive silver halide photographic material using the same.

(57) Disclosed are a support comprising a stretched film of a copolymerized polyester matrix mainly composed of polyethylene terephthalate, the polyester matrix contains (i) 1 to 10 mole % of at least one of (A) an aromatic dicarboxylic acid unit having a metal sulfonate group and (B) an aromatic diol unit having a metal sulfonate group based on whole ester bond units and (ii) 1 to 10 % by weight of (C) a polyalkylene glycol based on the copolymerized polyester matrix (provided that the case where the total amount of (A) and (B) is less than 3 mole % and the amount of (C) is less than 3 % by weight is excluded), and has an intrinsic viscosity ($\eta$) of 0.40 or more; and a light-sensitive silver halide photographic material having the support as mentioned above and at least one silver halide emulsion layer provided on at least one side of the support.

EP 0 545 439 A1

## BACKGROUND OF THE INVENTION

This invention relates to a support for a photographic material and a light-sensitive silver halide photographic material which are convenient for photography and handling and suitable for a miniature camera, more specifically to a support for a photographic material and a light-sensitive silver halide photographic material which can be made thinner and further has excellent property for resolving roll set curl.

Miniature cameras which can be handled easily and is portable, by which photographs can be taken with ease have been practically used.

From the points of portability and easy handling, further miniaturization has been demanded. However, in investigation of miniaturization, it is indispensable to make a housing space of a photographic film to be loaded in a camera more compact. In general, as a photographic film, a roll film wound around a spool is loaded in a camera. Therefore, in order to make the space more compact and yet keep a certain number of photographings (e.g. 36 exposures), it is necessary to make a thickness of a photographic film thinner. Even a thickness of a photographic film support which has been used in recent days is about 120 to 125 $\mu$m, and the thickness is considerably thicker than a thickness (about 20 to 30 $\mu$m) of a light-sensitive layer located thereon. Thus, it is considered to be the most effective means of making a whole thickness of a photographic film to make the thickness of a support thinner. As a plastic film support which has been conventionally used, there may be mentioned representatively a triacetate film such as triacetyl cellulose (TAC), but mechanical strength of a TAC film is inherently poor so that it is impossible to make such a film thinner.

On the other hand, polyester has been conventionally known as a support, and has been used for an X-ray film and a process film. It may be also applied to a color negative film because of its excellent strength. A polyester support has excellent strength, but has a drawback that roll set curl once formed is substantially impossible to be straightened even after development processing.

As a means of straightening roll set curl of a polyester support, there may be mentioned a method of imparting hydrophilicity to the polyester support. However, there involves an inconvenience that strength of the polyester support is lowered only by imparting hydrophilicity so that further improvement is required. For example, Japanese Provisional Patent Publication No. 120857/1990 discloses an improved technique of imparting hydrophilicity to a polyester support, but sufficient strength cannot be obtained. In order to obtain a thin light-sensitive material which can be used for a miniature camera, a thin support having good property for resolving roll set curl and excellent strength is required.

## SUMMARY OF THE INVENTION

The present invention has been made considering the above problems of the prior art to be solved, and an object of the present invention is to provide a support for a photographic material and a light-sensitive silver halide photographic material using the same which can be made thinner, has excellent property for resolving roll set curl and is particularly suitable for a miniature camera.

The above object can be accomplished by the following constitutions. That is, the support for a photographic material of the present invention comprises a copolymerized polyester matrix mainly comprising a polyethylene terephthalate,

which polyester matrix contains

(i) 1 to 10 mole % of at least one of

(A) an aromatic dicarboxylic acid unit having a metal sulfonate group and

(B) an aromatic diol unit having a metal sulfonate group based on whole ester bond units and

(ii) 1 to 10 % by weight of (C) a polyalkylene glycol based on said copolymerized polyester matrix (provided that the case where the total amount of (A) and (B) is less than 3 mole % and the amount of (C) is less than 3 % by weight is excluded), and has an intrinsic viscosity ($\eta$) of 0.40 or more,

and the light-sensitive silver halide photographic material of the present invention comprises the above support and at least one silver halide emulsion layer provided on at least one side of the support.

## BRIEF DESCRIPTION OF THE DRAWINGS

Fig. 1 is a perspective view showing a rough constitution of a wedge-shaped brittleness tester used for measuring brittleness of the light-sensitive material according to the present invention.

## DESCRIPTION OF THE PREFERRED EMBODIMENTS

In the following, the present invention is explained in detail.

The light-sensitive silver halide photographic material of the present invention has at least one silver halide emulsion layer on at least one side of a support of the invention, and said support comprises a resin matrix having the following constitution described in detail.

The support according to the present invention is a support not yet provided a subbing layer for providing a silver halide emulsion layer(s) or a antistatic layer for preventing electrostatic charge thereon.

The support of the present invention comprises a copolymerized polyester matrix mainly composed of polyethylene terephthalate, which matrix contains 1 to 10 mole % of at least one of (A) an aromatic dicarboxylic acid having a metal sulfonate group and (B) an aromatic diol having a metal sulfonate group based on whole ester bond units and (ii) 1 to 10 % by weight of (C) a polyalkylene glycol based on said copolymerized polyester matrix (provided that the case where the total amount of (A) and (B) is less than 3 mole % and the amount of (C) is less than 3 % by weight is excluded), and has an intrinsic viscosity ($\eta$) of 0.40 or more. A preferred chemical component of the support of the present invention is a copolyester containing an aromatic dibasic acid, particularly terephthalic acid, and glycol as main constitutional components. A component which is copolymerized with a terephthalic acid component and a glycol component is an aromatic dicarboxylic acid having a metal salt of sulfonic acid and polyethylene glycol. As the aromatic dicarboxylic acid having a metal salt of sulfonic acid, there may be mentioned 5-sodium sulfoisophthalic acid, 2-sodium sulfophthalic acid, 4-sodium sulfonaphthalenedicarboxylic acid, a compound in which each of these sodiums is substituted by another metal such as potassium and lithium, and an ester compound thereof. In the present invention, 5-sodium sulfoisophthalic acid or an ester compound thereof is particularly preferred.

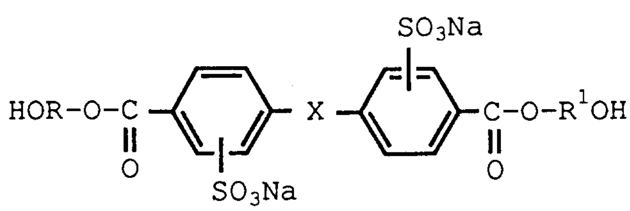

wherein X represents $H_3C\text{-}C\text{-}CH_3$, $-CH_2-$, $-SO_2-$ or $-O-$; and R and R' each represent $-(CH_2)n-$ where n is an integer of 1 to 20.

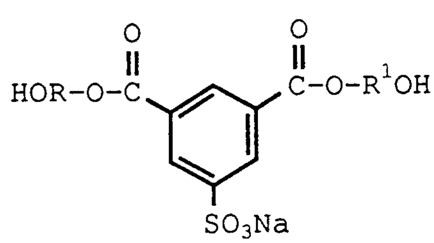

wherein R and R' each represent $-(CH_2)n-$ where n is an integer of 1 to 20.

Also, as the aromatic diol having a metal sulfonate group, the following may be mentioned.

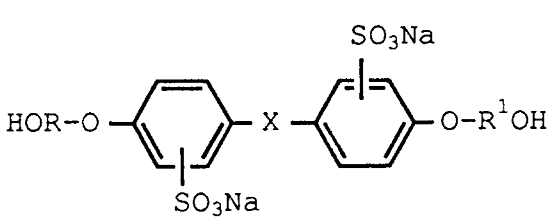

wherein X represents $H_3C$-C-$CH_3$, -$CH_2$-, -$SO_2$- or -O-; and R and R' each represent -$(CH_2)n$- where n is an integer of 1 to 20.

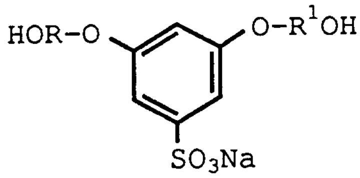

wherein R and R' each represent -$(CH_2)n$- where n is an integer of 1 to 20.

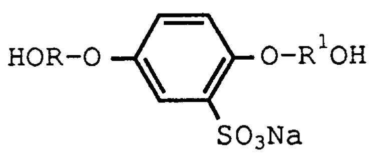

wherein R and R' each represent -$(CH_2)n$- where n is an integer of 1 to 20.

In the present invention, the copolymerized polyester mainly comprising a polyester contains the polyalkylene glycol in the range of 10 % by weight or less based on the copolymerized polyester, and the aromatic dicarboxylic acid having a metal sulfonate group and/or the aromatic diol having a metal sulfonate group is/are contained in the range of 10 mole % or less based on the whole ester linkages. However, the case where the polyalkylene glycol is less than 3 % by weight and also the total of the aromatic dicarboxylic acid having a metal sulfonate group and the aromatic diol having a metal sulfonate group is less than 3 mole % is excluded. The aromatic dicarboxylic acid having a metal sulfonate group and/or the aromatic diol having a metal sulfonate group is/are preferably contained in the range of 2 to 5 mole % based on the whole acid component. Further, the polyalkylene glycol preferably has a number average molecular weight of 300 to 20,000, more preferably 600 to 10,000, particularly preferably 1,000 to 5,000, and an amount of the copolymerizable polyalkylene glycol component is preferably in the range of 3 to 7 % by weight. Further preferred is a polyalkylene glycol which satisfies these two ranges.

The polyalkylene glycol may include polyethylene glycol (PEG), polypropylene glycol (PPG) and polytetramethylene glycol (PTG), but it is particularly preferably polyethylene glycol.

In addition to these compounds, there may be contained, as an acid component, compounds such as isophthalic acid or an ester compound thereof and adipic acid or an ester compound thereof, and, as an alcohol component, compounds such as propylene glycol, butanediol, neopentyl glycol, 1,4-cyclohexanediol and diethylene glycol, in the range which does not impair the effect of the present invention.

Further, the intrinsic viscosity ($\eta$) of the copolymerized polyester film constituting the support of the present invention is required to be 0.40 or more. The intrinsic viscosity ($\eta$) is preferably 0.50 to 0.70. The intrinsic viscosity ($\eta$) in the present invention is a value measured by a method shown in Example 1 described below.

In the copolymerizable polyester component constituting the support of the present invention, various additives may be contained. For example, a dye may be added to said polyester film for the purpose of preventing light piping phenomenon (edge fog) caused when light is incident from an edge upon a film on which a photographic emulsion layer is provided by coating. The film dye is not particularly limited. However, a film dye having excellent heat resistance is preferred for a polyester film-forming step, and, for example, an anthraquinone type chemical dye may be included. From the point of a color tone of a film, a gray dye used in a common light-sensitive material is preferred, and one dye or a mixture of two or more dyes may be used. For example, dyes such as SUMIPLAST (trade name) produced by Sumitomo Kagaku Kabushiki Kaisha, Diaresin (trade name) produced by Mitsubishi Kasei Corporation and MACROLEX (trade name) produced by Bayer AG may be used singly or in a suitable combination to accomplish the object.

In order to impart easily lubricating property, phosphoric acid, phosphorous acid and esters thereof and an inorganic particle (e.g. silica, kaolin, calcium carbonate, calcium phosphate and titanium dioxide) may be contained in the polymer matrix to be used during polymerization, or an inorganic particle may be blended in the polymer after polymerization.

To the polymer matrix or to the polymer may be optionally added a UV absorber and an antioxidant, as other additives, during polymerization or in any step after polymerization.

A method for preparing the copolymerizable polyester resin constituting the support of the present invention is not particularly limited, but it may be suitably prepared, for example, by a method in which a dicarboxylic acid component and a glycol component are subjected to transesterification, and then subjected to polycondensation under a high temperature and a reduced pressure. At this time, a copolymerizable component such as an aromatic dicarboxylic acid component having a metal sulfonate group, a polyalkylene glycol, and a diol may be added at the transesterification reaction, or may be added at the polycondensation after the transesterification reaction. It can be obtained also by a known synthesis method of melt polymerization or solid phase polymerization of a polymer obtained by melt polymerization. The support of the present invention can be formed from the resulting polyester resin as described below.

That is, the resulting copolymerizable polyester is dried and then melt extruded to prepare an unstretched sheet. Subsequently, the sheet is stretched to a longitudinal direction and a lateral direction and fixed by heat to obtain a desired film. The stretching ratio is not particularly limited, but it is generally 2 to 5-fold to a longitudinal direction and 2 to 5-fold to a lateral direction, and the area magnification ratio is suitably 4 to 16-fold. The stretching method is not particularly limited, but suitable is a stepwise biaxial stretching method in which a material is stretched in a longitudinal direction and then stretched in a lateral direction. The temperature during stretching is not particularly limited, but it is suitably 50 to 140 °C. The temperature of heat fixing is not particularly limited, but it is suitably 150 to 240 °C.

The film thickness of the support for a light-sensitive silver halide photographic material comprising the copolymerized polyester film of the present invention is particularly preferably in the range of 50 µm to 200 µm. If the film thickness of the support is made about 50 to 100 µm, the whole thickness of a photographic film can be made thinner and more compact while keeping a certain number or more of photographings.

The light-sensitive silver halide photographic material (hereinafter abbreviated as "light-sensitive material") of the present invention has at least one silver halide emulsion layer on at least one side of the copolymerized polyester film support described above. That is, at least one silver halide emulsion layer may be provided on one side of the support, or at least one silver halide emulsion layer may be provided on both sides of the support. Further, the silver halide emulsion may be provided directly on the support by coating, or may be provided by coating through another layer, for example, a hydrophilic colloid layer containing no silver halide emulsion, and a hydrophilic colloid layer may be further provided as a protective layer on the silver halide emulsion layer by coating. The silver halide emulsion layer may be provided by coating silver halide emulsion layers with different sensitivities, e.g. high sensitivity and low sensitivity separately. In that case, an intermediate layer may be provided between the respective silver halide emulsion layers. That is, an intermediate layer comprising hydrophilic colloid may be provided, if necessary. Further, between the silver halide emulsion layer and a protective layer, a non-light-sensitive hydrophilic colloid layer such as an intermediate layer, a protective layer, an antihalation layer and a backing layer may be provided.

As silver halide to be used in the light-sensitive silver halide photographic material of the present invention, silver halide having any composition may be used. For example, silver chloride, silver chlorobromide, silver chloroiodobromide, pure silver bromide or silver iodobromide may be included.

To the silver halide emulsion to be used in the present invention, a sensitizing dye, a plasticizer, an antistatic agent, a surfactant and a hardener may be also added.

When the light-sensitive silver halide photographic material of the present invention is subjected to development processing, developers as described in, for example, T.H. James "The Theory of the Photographic Process, Fourth Edition", p. 291 to p. 334, and "Journal of the American Chemical Society", Vol. 73, p. 3 and p. 100 (1951) can be used.

## EXAMPLES

The present invention is described in detail by referring to Example.

### Example 1

Calcium acetate hydrate (0.1 part by weight) was added to 100 parts by weight of dimethyl terephthalate and 64 parts by weight of ethylene glycol, and the mixture was subjected to transesterification reaction according to a conventional manner. To the resulting product were added an ethylene glycol solution of 5-sodium sulfo-di($\beta$-hydroxyethyl)isophthalate (SIP) (concentration: 35 % by weight) (an amount added was changed as shown in Table 1-1), polyethylene glycol (PEG) (number average molecular weight

(Mn) : 600 to 20,000, an amount added was changed as shown in Table 1-1), 0.05 part by weight of antimony trioxide and 0.13 part by weight of trimethyl phosphate. Subsequently, the temperature of the mixture was gradually elevated and the pressure thereof was gradually reduced. Then, the mixtures were polymerized at 280 °C and 0.5 mmHg, respectively, to obtain copolymerized polyesters.

The resulting polymers were melt extruded from a T-die at 280 °C to have a film shape, followed by quenching on a cooling drum, to obtain unstretched films (thickness: 1,000 µm). The unstretched films were preheated to 80 °C, and it was stretched longitudinally (3.2-fold), stretched laterally at 80 °C (3.2-fold) and further thermally fixed at 210 °C to obtain films having a film thickness of 100 µm, respectively.

For the copolymerized polyester films according to the present invention, the following measurements were carried out, and the results are shown in Table 1-2.

⟨Intrinsic viscosity⟩

It was measured by using a Ubbelohde's viscometer. By using a solvent mixture of phenol and 1,1,2,2-tetrachloroethane with a weight ratio of about 55 : 45 (a flowing down time was adjusted to 42.0 ± 0.1 second), solutions (temperature: 20 °C) having sample concentrations of 0.2, 0.6 and 1.0 g/dl were prepared by dissolving a film in a solvent, respectively. By using the Ubbelohde's viscometer, specific viscosity ($\eta_{sp}$) at each concentration (C) was determined, and the intrinsic viscosity ($\eta$) was determined by extrapolating a value when the concentration was 0 by the following formula:

$$(\eta) = \lim_{C \to 0} \frac{\eta_{sp}}{C} .$$

When the intricsic viscosity was measured after preparing a light-sensitive material on a support, substantially the same results can be obtained so that it may be measured after preparation of a light-sensitive material. That is, a silver halide emulsion layer(s) and/or a gelatin back layer(s) provided on the both surfaces of the support of the light-sensitive material was peeled off by pancreatin or a sodium hydrochlorite aqueous solution, the support was cut off and the cut sample was measured in the same manner as mentioned above.

⟨Modulus of elasticity and fracture strength⟩

By using Tensilone (trade name, manufactured by Toyo Boldwin), modulus of elasticity and fracture strength in longitudinal direction were measured under atmosphere at 23 °C and 55 % RH (relative humidity) by using a short strip with a width of 10 mm and a distance between lateral lines of 100 mm and a tensile speed of 100 mm/min according to JIS-K7113. Based on the strength of a triacetyl cellulose (TAC) film having a film thickness of about 120 µm which is used in a commercially available color film, it is required to have modulus of elasticity of 350 $kg/mm^2$ or more and fracture strength of 10 kg or more.

⟨Tear test⟩

By using a light load tear tester (manufactured by Toyo Seiki Seisakusho), measurement was carried out under atmosphere at 23 °C and 55 % RH by applying a 13-mm cut to a test strip of 50 mm x 64 mm. The tear strength was evaluated by using the following three standards.

O: 100 g/sheet or more
Δ: 50 to less than 100 g/sheet
X: less than 50 g/sheet

A commercially available TAC film has about 40 g/sheet so that the grades "O" and "Δ" are preferred.

⟨Property for resolving roll set curl⟩

A film with a width of 35 mm and a length of 12 cm was wound around a core with a diameter of 10 mm, and the wound film was stored at 55 °C and 20 % RH for 72 hours. Thereafter, the film was released from the core, and one end of the film was loaded with 50 g. The loaded film was dipped in a water bath at 40 °C for 15 minutes and then dried for 3 minutes by means of a hot air dryer at 55 °C. The length of the

film hung naturally after removing the load was measured and evaluated based on a ratio to its original length by using the following three standards. As property of a photographic support film, grades "○" and "◎" are preferred.

◎: 70 % or more
○: 50 to less than 70 %
X: less than 50 %

⟨Total evaluation⟩

Total evaluation of the respective items was conducted based on the number of items which satisfied the following ranges by using four standards.

| | |
|---|---|
| Modulus of elasticity: | 400 $kg/mm^2$ or more |
| Fracture strength: | 10 kg or more |
| Tear strength: | 100 g/sheet (Grade ○) or more |
| Property for resolving roll set curl: | 70 % (Grade ◎) or more |

Total evaluation

A: 4 items satisfy the above good ranges
B: 3 items satisfy the above good ranges
C: 2 items satisfy the above good ranges
D: 1 item satisfies the above good range
E: one or more of mechanical strengths is/are lower than that of TAC, or property for resolving roll set curl is less than 50 % (Grade X)

The evaluation of TAC (Sample No. 22) which is a support of a commercially available color film is D so that the grade D or higher is required for a photographic support, and in order to make a film thinner, the grade C or higher is preferred.

Example 2

To 100 parts by weight of dimethyl terephthalate and 64 parts by weight of ethylene glycol were added 28 parts by weight of 5-sodium sulfo-di($\beta$-hydroxyethyl)isophthalate (abbreviated to as "SIP") ethylene glycol solution (38 % by weight concentration) (5 mole %/total ester linkage), 9 parts by weight of polyethylene glycol (abbreviated to as "PEG") (number average molecular weight: 1000) (7 % by weight/polymer), 0.05 part by weight of sodium acetate, 0.13 part by weight of trimethyl phosphate and Irganox 1010 (trade name, available from CIBA-GEIGY AG) as an antioxidant in an amount of 0.5 % by weight based on the formed polymer, and the mixture was mixed. Then, under stirring, 0.05 part by weight of manganese acetate and 0.05 part by weight of antimony trioxice were added as catalysts.

Thereafter, the temperature of the mixture was gradually elevated and at 170 °C, methanol was evaporated under nitrogen atmosphere, and then polymerization was carried out under reduced pressure at 270 °C and 0.5 mmHg to obtain a copolymerized polyester. In the same manner as in Example 1, a support having a thickness of 100 $\mu$m was obtained. The sample was evaluated in the samen manner as in Example 1 and the results are shown in Table 1 (as Sample No. 16).

When a melt polymerization is carried out by using a mixture in which a copolymerizable component is added before transesterification, its characteristics are slightly lowered than that of Sample No. 7 in which a copolymerizable component is added after transesterification.

Comparative example 1

In the same manner as in Example 1, polymers containing copolymerization components with composition ratios shown in Table 1-1 were obtained. In the same manner as in Example 1, films having a film thickness of 100 $\mu$m were prepared. The results of measurements carried out in the same manner as in Example 1 are shown in Table 1-2.

Comparative example 2

The measured results of a commercially available triacetyl cellulose (TAC) film (thickness: 120 $\mu$m) are shown in Table 1-2.

Table 1-1

| | Sample No. | Polyalkylene glycol | | | | SIP | |
|---|---|---|---|---|---|---|---|
| | | Kind | Mn (molecular weight | Amount added (part by weight) | Copolymerization ratio (wt %/polymer) | Amount added (part by weight) | Copolymerization ratio (mole %/whole acid component) |
| Example 1 | 1 | PEG | 3,000 | 4 | 3.3 | 28 | 5 |
| | 2 | PEG | 3,000 | 9 | 7 | 28 | 5 |
| | 3 | PEG | 3,000 | 12 | 9 | 28 | 5 |
| | 4 | PEG | 3,000 | 9 | 7 | 16 | 3 |
| | 5 | PEG | 3,000 | 9 | 7 | 39 | 7 |
| | 6 | PEG | 600 | 10 | 7 | 28 | 5 |
| | 7 | PEG | 1,000 | 9 | 7 | 28 | 5 |
| | 8 | PEG | 3,000 | 9 | 7 | 28 | 5 |
| | 9 | PEG | 5,000 | 9 | 7 | 28 | 5 |
| | 10 | PEG | 10,000 | 9 | 7 | 28 | 5 |
| | 11 | PEG | 20,000 | 9 | 7 | 28 | 5 |
| | 12 | PEG | 3,000 | 2 | 2 | 28 | 5 |
| | 13 | PEG | 3,000 | 9 | 7 | 11 | 2 |
| | 14 | PEG | 400 | 10 | 7 | 28 | 5 |
| | 15 | PEG | 30,000 | 9 | 7 | 28 | 5 |
| Example 2 | 16 | PEG | 1,000 | 9 | 7 | 28 | 5 |

Table 1-1 (cont'd)

| | Sam-ple No. | Polyalkylene glycol | | | | SIP | |
|---|---|---|---|---|---|---|---|
| | | Kind | Mn (molecular weight | Amount added (part by weight) | Copolymeriza-tion ratio (wt %/polymer) | Amount added (part by weight) | Copolymeriza-tion ratio (mole %/whole acid component) |
| Comparative example 1 | 17 | PEG | 3,000 | 15 | 11 | 28 | 5 |
| | 18 | PEG | 3,000 | 10 | 7 | 65 | 11 |
| | 19 | PEG | — | 0 | 0 | 0 | 0 |
| | 20 | PEG | 3,000 | 9 | 7 | 0 | 0 |
| | 21 | PEG | — | 0 | 0 | 28 | 5 |
| | 22 | PEG | 3,000 | 2 | 2 | 11 | 2 |
| Comparative example 2 | 23 | TAC | — | — | — | — | — |

Table 1-2

| | Sample No. | (η) (dl/g) | Modulus of elasticity ($kg/mm^2$) | Fracture strength (kg) | Tear strength | Property for re-solving roll set curl | Total evaluation |
|---|---|---|---|---|---|---|---|
| Example 1 | 1 | 0.51 | 400 | 13 | ○ | ○ | B |
| | 2 | 0.51 | 400 | 14 | ○ | ◎ | A |
| | 3 | 0.52 | 370 | 13 | ○ | ◎ | B |
| | 4 | 0.63 | 410 | 17.5 | ○ | ◎ | A |
| | 5 | 0.43 | 390 | 10.5 | ○ | ◎ | B |
| | 6 | 0.51 | 430 | 13.5 | ○ | ○ | B |
| | 7 | 0.51 | 420 | 14 | ○ | ◎ | A |
| | 8 | 0.52 | 410 | 14 | ○ | ◎ | A |
| | 9 | 0.53 | 400 | 14 | ○ | ◎ | A |
| | 10 | 0.56 | 400 | 14 | ○ | ◎ | A |
| | 11 | 0.58 | 400 | 14.5 | ○ | ○ | B |
| | 12 | 0.52 | 400 | 11.5 | ○ | ○ | B |
| | 13 | 0.66 | 410 | 18 | ○ | ◎ | A |
| | 14 | 0.50 | 440 | 13.5 | Δ | ○ | C |
| | 15 | 0.62 | 390 | 15.5 | ○ | ○ | C |
| Example 2 | 16 | 0.41 | 380 | 10.2 | Δ | ○ | C |

Table 1-2 (cont'd)

| | Sample No. | (η) (dl/g) | Modulus of elasticity ($kg/mm^2$) | Fracture strength (kg) | Tear strength | Property for resolving roll set curl | Total evaluation |
|---|---|---|---|---|---|---|---|
| Comparative example 1 | 17 | 0.54 | 320 | 12 | ○ | **O** | E |
| | 18 | 0.39 | 350 | 8 | Δ | **O** | E |
| | 19 | 0.66 | 560 | 25 | Δ | X | E |
| | 20 | 0.72 | 390 | 19 | Δ | X | E |
| | 21 | 0.53 | 405 | 11 | Δ | X | E |
| | 22 | 0.66 | 420 | 16 | Δ | X | E |
| Comparative example 2 | 23 | - | 350 | 9.6 | X | **O** | D |

From the results shown in Tables 1-1 and 1-2, it can be seen that the modified polyester film supports according to the present invention have excellent modulus of elasticity, fracture strength and tear strength and also good property for resolving roll set curl, and the total evaluations are A to C which are more excellent than the evaluation D of Sample No. 23 TAC of Comparative example 2. When Samples No. 1 to No. 13 are compared with Samples No. 14 and No. 16, it can be seen that the samples containing

polyalkylene glycol with a molecular weight of 600 to 20,000 are particularly suitable as a photographic support. On the other hand, in Samples No. 19 to No. 22 of Comparative example 1, other mechanical strengths are good, but property for resolving roll set curl is poor. Thus, they are not suitable and apparently inferior to those of the present invention. Further, the modulus of elasticity of Sample No. 17 is lower than that of Sample No. 23 TAC. Sample No. 18 has a low intrinsic viscosity and poor film forming ability, and fracture occurred frequently during formation of a film. Therefore, it has a low fracture strength and is not suitable.

Also, as clearly seen from Sample No. 16 of Example 2, in the copolymerized polyester obtained by adding a copolymerizable component is added before transesterification, its modulus of elasticity, fracture strength and tear strength are slightly lower than those (e.g. Sample No. 7) obtained by adding the same after transesterification.

Example 3

In the same manner as in Example 1, copolymers having compositional ratios shown in Table 2 were obtained. Films were formed in the same manner as in Example 1 except for changing the longitudinal stretching ratio and the lateral stretching ratio to 3.5-fold, respectively, to obtain films having a film thickness of 85 µm. The results of measurements carried out in the same manner as in Example 1 are also shown in Table 2.

Table 2

| | Sample No. | Polyalkylene glycol Kind | Mn (molecular weight) | Amount added (part by weight) | Copolymerization ratio (wt %/polymer) | SIP Amount added (part by weight) | Copolymerization ratio (mole %/whole acid component) |
|---|---|---|---|---|---|---|---|
| Example 3 | 24 | PEG | 3,000 | 9 | 7 | 28 | 5 |
| | 25 | PEG | 3,000 | 9 | 7 | 39 | 7 |
| | 26 | PEG | 3,000 | 10 | 7 | 52 | 9 |

| | Sample No. | (η) (dl/g) | Modulus of elasticity ($kg/mm^2$) | Fracture strength (kg) | Tear strength | Property for resolving roll set curl | Total evaluation |
|---|---|---|---|---|---|---|---|
| Example 3 | 24 | 0.51 | 410 | 12 | O | ◎ | A |
| | 25 | 0.43 | 395 | 11.5 | O | ◎ | B |
| | 26 | 0.40 | 370 | 10 | O | ◎ | B |

From the results shown in Table 2, it can be seen that in the copolymerized polyester films of the present invention, even when the isophthalic acid component having a metal sulfonate group is contained in an amount of 9 mole % or more based on the whole ester linkages, modulus of elasticity and fracture strength can be improved to suitable ranges, and from the above results and the results of Example 1, the copolymerizable component of the isophthalic acid component having a metal sulfonate group is preferably

10 mole % or less.

Example 4

In the same manner as in Example 1 except for using polypropylene glycol (PPG) or polytetramethylene glycol (PTG) in place of polyethylene glycol of Example 1, polymers having compositional ratios shown in Table 3 were obtained. Films were formed in the same manner as in Example 1 to obtain films having a film thickness of 100 µm. The results measurements carried out in the same manner as in Example 1 are also shown in Table 3.

Table 3

| | Sample No. | Polyalkylene glycol | | | | SIP | |
|---|---|---|---|---|---|---|---|
| | | Kind | Mn (molecular weight | Amount added (part by weight) | Copolymerization ratio (wt %/polymer) | Amount added (part by weight) | Copolymerization ratio (mole %/whole acid component) |
| Example 4 | 27 | PPG | 5,000 | 8 | 6 | 28 | 5 |
| | 28 | PTG | 5,000 | 8 | 6 | 28 | 5 |

| | Sample No. | (η) (dl/g) | Modulus of elasticity ($kg/mm^2$) | Fracture strength (kg) | Tear strength | Property for resolving roll set curl | Total evaluation |
|---|---|---|---|---|---|---|---|
| Example 4 | 27 | 0.52 | 400 | 16 | Δ | O | C |
| | 28 | 0.56 | 390 | 14.5 | O | O | C |

From the results shown in Table 3, it can be seen that the samples of the present invention have more excellent mechanical strength and better property for resolving roll set curl than those of Sample No. 23 TAC of Comparative example 2 shown in Table 1-2.

Example 5

In the same manner as in Example 1, obtained was a polymer containing 3 mole % of 5-sodium sulfoisophthalate based on the whole ester linkages and 7 % by weight of polyethylene glycol (number average molecular weight: 3,000) as copolymer components and having an intrinsic viscosity of 0.60 dl/g. The copolymer was melt extruded from a T-die at 270 °C to have a film shape, quenched on a cooling drum and taken off under four taking-off speed conditions to obtain four unstretched films having film thicknesses of 1,000 µm, 900 µm, 780 µm and 650 µm, respectively. Thereafter, in the same manner as in Example 1 except for carrying out longitudinal stretching (3.3-fold) and lateral stretching (3.3-fold), films with different thicknesses were prepared.

All samples had an intrinsic viscosity of 0.55 dl/g and had a good modulus of elasticity of about 420 $kg/mm^2$ which is more excellent than that of TAC. The results of measurements of fracture strength, tear strength and property for resolving roll set curl are shown in Table 4.

Comparative example 3

A commercially available triacetic acid cellulose (TAC) film (thickness: 100 µm) was evaluated in the same manner as in Example 5, and the results are shown in Table 4.

Table 4

| | Sample No. | Film thickness (µm) | Fracture strength (kg) | Tear strength | Property for resolving curl roll set |
|---|---|---|---|---|---|
| Example 5 | 29 | 85 | 15.0 | ○ | ◎ |
| | 30 | 75 | 13.1 | Δ | ◎ |
| | 31 | 65 | 11.5 | Δ | ◎ |
| | 32 | 55 | 9.7 | Δ | ◎ |
| Comparative example 3 | 33 | 100 | 8.0 | X | ◎ |

From the results shown in Table 4, it can be seen that even when the thickness of the modified polyester film supports according to the present invention are as thin as 50 to 100 µm (Samples No. 29 to No. 32), the supports have more excellent strength than that of the TAC film (thickness: 100 µm) which is required as a support, and also have good property for resolving roll set curl.

Example 6

Preparation of a light-sensitive material

Corona discharging treatment of 8 W/($m^2$•min) were subjected to both surfaces of the support films (Samples No. 29 to No. 32) of Example 5 according to the present invention, and on one surface thereof was coated the following subbing coating solution B-3 with a dried film thickness of 0.8 µm to form a subbing layer B-3 and also on the other surface of the support was coated the following subbing coating solution B-4 with a dried film thickness of 0.8 µm to form a subbing layer B-4.

⟨Subbing coating solution B-3⟩

| | |
|---|---|
| Copolymer latex solution (solid component: 30 %) comprising 30 % by weight of butyl acrylate, 20 % by weight of t-butyl acrylate, 25 % by weight of styrene and 25 % by weight of 2-hydroxyethyl acrylate | 270 g |
| Compound (UL - 1) | 0.6 g |
| Hexamethylene-1,6-bid(ethylene urea) | 0.8 g |
| Made up to 1000 ml with water | |

⟨Subbing coating solution B-4⟩

| | |
|---|---|
| Copolymer latex solution (solid component: 30 %) comprising 40 % by weight of butyl acrylate, 20 % by weight of styrene and 40 % by weight of glycidyl acrylate | 270 g |
| Compound (UL - 1) | 0.6 g |
| Hexamethylene-1,6-bid(ethylene urea) | 0.8 g |
| Made up to 1000 ml with water | |

Further, on the subbing layer B-3 and the subbing layer B-4 were subjected corona discharging treatment of 8 W/($m^2$•min), respectively, and on the subbing layer B-3 was coated the following coating solution B-5 with a dried film thickness of 0.1 µm to form a subbing layer B-5 and on the subbing layer B-4 was coated the following coating solution B-6 with a dried film thickness of 0.8 µm to form a subbing layer B-6 having antistatic function.

⟨Coating solution B-5⟩

| | |
|---|---|
| Gelatin | 10 g |
| Compound (UL - 1) | 0.2 g |
| Compound (UL - 2) | 0.2 g |
| Compound (UL - 3) | 0.1 g |
| Silica particle (average particle size: 3 µm) | 0.1 g |
| Made up to 1000 ml with water | |

⟨Coating solution B-6⟩

| | |
|---|---|
| Water-soluble conductive polymer (UL - 4) | 60 g |
| Latex solution (solid component: 20 %) containing Compound (UL - 4) | 80 g |
| Ammonium sulfate | 0.5 g |
| Curing agent (UL - 6) | 12 g |
| Polyethyelen glycol (weight average molecular weight: 6000) | 6 g |
| Made up to 1000 ml with water | |

Chemical structures of the used Compound (UL - 1) to (UL - 6) are shown below.

On the subbing layer B-5 was subjected to corona discharging of 25 W/($m^2$•min) and also on the subbing layer B-6 was subjected to corona discharging of of 8 W/($m^2$•min), respectively. Further, the following emulsion layers and other layers were provided on the subbing layer B-5, and also the following backing layer coating solution was coated on the subbing layer B-6, successively to prepare a multi-layered light-sensitive color photographic mataterial 1. The numerical designations in following ⟨backing layer⟩ and ⟨emulsion layer⟩ show an amount per $m^2$.

⟨Backing layer⟩

| First layer: | |
|---|---|
| Gelatin | 4.5 g |
| Sodium di-(2-ethylhexyl)sulfosuccinate | 1.0 g |
| Sodium tripolyphosphate | 76 mg |
| Citric acid | 16 mg |
| Carboxyalkyl textran sulfate | 49 mg |
| Vinyl sulfone type hardener | 23 mg |

| Second layer: | |
|---|---|
| Gelatin | 1.5 g |
| Polymer beads (average particle size: 3 µm, polymethyl methacrylate) | 24 mg |
| Sodium di-(2-ethylhexyl)sulfosuccinate | 15 mg |
| Carboxyalkyl textran sulfate | 12 mg |
| Vinyl sulfone type hardener | 30 mg |
| Fluorine series surfactant (SB - 2 and SB - 3 molar ratio = 1 : 1) | 45 mg |
| Compound SB - 1 | 230 mg |

UL - 1

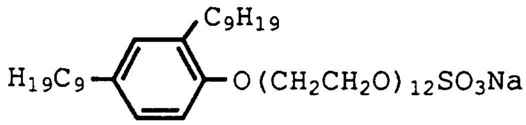

UL - 2

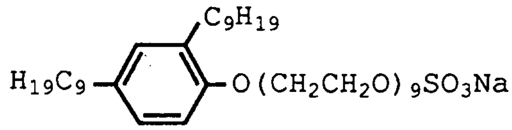

UL - 3

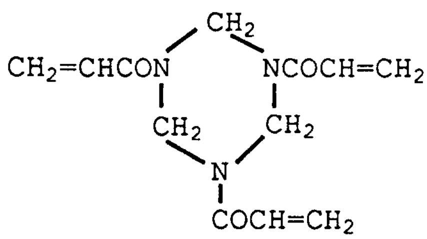

UL - 4

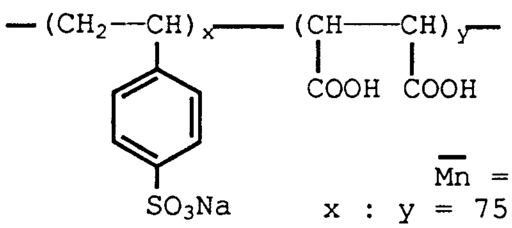

$\overline{Mn}$ = 5000

x : y = 75 : 25 (weight ratio)

UL - 5

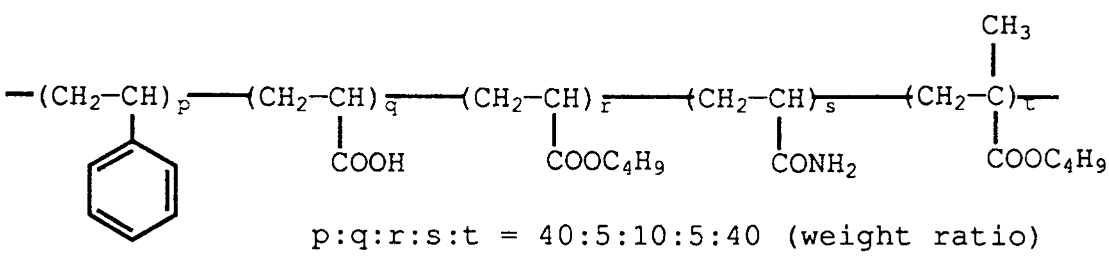

p:q:r:s:t = 40:5:10:5:40 (weight ratio)

UL - 6

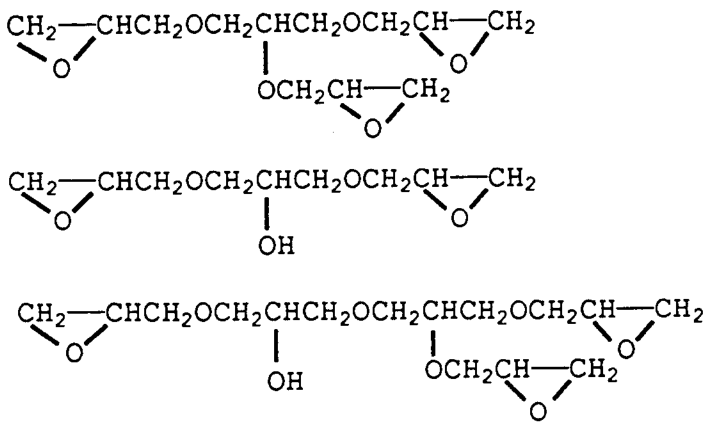

Mixture of three compounds

SB - 1

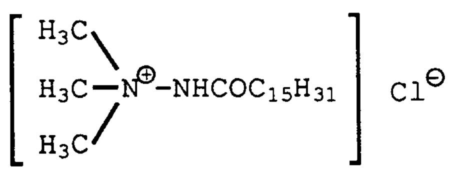

SB - 2 $C_8F_{17}S_2NH(CH_2)_3N^{\oplus}(CH_3)\ I^{\ominus}$

SB - 3

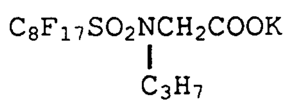

On the surfaces of the above supports subjected to subbing treatment, the respective layer having the following compositions were formed successively from the support side to prepare multilayer light-sensitive color photographic materials No. 100 to 103, respectively.

| First layer: Antihalation layer (HC) | |
|---|---|
| Black colloidal silver | 0.15 g |
| UV absorber (UV-1) | 0.20 g |
| Compound (CC-1) | 0.02 g |
| High boiling point solvent (Oil-1) | 0.20 g |
| High boiling point solvent (Oil-2) | 0.20 g |
| Gelatin | 1.6 g |

| Second layer: Intermediate layer (IL-1) | |
|---|---|
| Gelatin | 1.3 g |

| Third layer: Low sensitivity red-sensitive emulsion layer (R-L) | |
|---|---|
| Silver iodobromide emulsion (average grain size: 0.3 $\mu$m) (average iodine content: 2.0 mole %) | 0.4 g |
| Silver iodobromide emulsion (average grain size: 0.4 $\mu$m) (average iodine content: 8.0 mole %) | 0.3 g |
| Sensitizing dye (S-1) | $3.2 \times 10^{-4}$ (mole/mole of Ag) |
| Sensitizing dye (S-2) | $3.2 \times 10^{-4}$ (mole/mole of Ag) |
| Sensitizing dye (S-3) | $0.2 \times 10^{-4}$ (mole/mole of Ag) |
| Cyan coupler (C-1) | 0.50 g |
| Cyan coupler (C-2) | 0.13 g |
| Colored cyan coupler (CC-1) | 0.07 g |
| DIR compound (D-1) | 0.006 g |
| DIR compound (D-2) | 0.01 g |
| High boiling point solvent (Oil-1) | 0.55 g |
| Gelatin | 1.0 g |

| Fourth layer: High sensitivity red-sensitive emulsion layer (R-H) | |
|---|---|
| Silver iodobromide emulsion (average grain size: 0.7 $\mu$m) (average iodine content: 7.5 mole %) | 0.9 g |
| Sensitizing dye (S-1) | $1.7 \times 10^{-4}$ (mole/mole of Ag) |
| Sensitizing dye (S-2) | $1.6 \times 10^{-4}$ (mole/mole of Ag) |
| Sensitizing dye (S-3) | $0.1 \times 10^{-4}$ (mole/mole of Ag) |
| Cyan coupler (C-2) | 0.23 g |
| Colored cyan coupler (CC-1) | 0.03 g |
| DIR compound (D-2) | 0.02 g |
| High boiling point solvent (Oil-1) | 0.25 g |
| Gelatin | 1.0 g |

| Fifth layer: Intermediate layer (IL-2) | |
|---|---|
| Gelatin | 0.8 g |

| Sixth layer: Low sensitivity green-sensitive emulsion layer (G-L) | |
|---|---|
| Silver iodobromide emulsion (average grain size: 0.4 $\mu$m) (average iodine content: 8.0 mole %) | 0.6 g |
| Silver iodobromide emulsion (average grain size: 0.3 $\mu$m) (average iodine content: 2.0 mole %) | 0.2 g |
| Sensitizing dye (S-4) | $6.7 \times 10^{-4}$ (mole/mole of Ag) |
| Sensitizing dye (S-5) | $0.8 \times 10^{-4}$ (mole/mole of Ag) |
| Magenta coupler (M-1) | 0.17 g |
| Magenta coupler (M-2) | 0.43 g |
| Colored magenta coupler (CM-1) | 0.10 g |
| DIR compound (D-3) | 0.02 g |
| High boiling point solvent (Oil-2) | 0.7 g |
| Gelatin | 1.0 g |

| Seventh layer: High sensitivity green-sensitive emulsion layer (G-H) | |
|---|---|
| Silver iodobromide emulsion (average grain size: 0.7 µm) (average iodine content: 7.5 mole %) | 0.9 g |
| Sensitizing dye (S-6) | 1.1 x $10^{-4}$ (mole/mole of Ag) |
| Sensitizing dye (S-7) | 2.0 x $10^{-4}$ (mole/mole of Ag) |
| Sensitizing dye (S-8) | 0.3 x $10^{-4}$ (mole/mole of Ag) |
| Magenta coupler (M-1) | 0.30 g |
| Magenta coupler (M-2) | 0.13 g |
| Colored magenta coupler (CM-1) | 0.04 g |
| DIR compound (D-3) | 0.004 g |
| High boiling point solvent (Oil-2) | 0.35 g |
| Gelatin | 1.0 g |

| Eighth layer: Yellow filter layer (YC) | |
|---|---|
| Yellow colloidal silver | 0.1 g |
| Additive (HS-1) | 0.07 g |
| Additive (HS-2) | 0.07 g |
| Additive (SC-1) | 0.12 g |
| High boiling point solvent (Oil-2) | 0.15 g |
| Gelatin | 1.0 g |

| Ninth layer: Low sensitivity blue-sensitive emulsion layer (B-L) | |
|---|---|
| Silver iodobromide emulsion (average grain size: 0.3 µm) (average iodine content: 2.0 mole %) | 0.25 g |
| Silver iodobromide emulsion (average grain size: 0.4 µm) (average iodine content: 8.0 mole %) | 0.25 g |
| Sensitizing dye (S-9) | 5.8 x $10^{-4}$ (mole/mole of Ag) |
| Yellow coupler (Y-1) | 0.6 g |
| Yellow coupler (Y-2) | 0.32 g |
| DIR compound (D-1) | 0.003 g |
| DIR compound (D-2) | 0.006 g |
| High boiling point solvent (Oil-2) | 0.18 g |
| Gelatin | 1.3 g |

| Tenth layer: High sensitivity blue-sensitive emulsion layer (B-H) | |
|---|---|
| Silver iodobromide emulsion (average grain size: 0.8 µm) (average iodine content: 8.5 mole %) | 0.5 g |
| Sensitizing dye (S-10) | 3 x $10^{-4}$ (mole/mole of Ag) |
| Sensitizing dye (S-11) | 1.2 x $10^{-4}$ (mole/mole of Ag) |
| Yellow coupler (Y-1) | 0.18 g |
| Yellow coupler (Y-2) | 0.10 g |
| High boiling point solvent (Oil-2) | 0.05 g |
| Gelatin | 1.0 g |

| Eleventh layer: First protective layer (PRO-1) | |
|---|---|
| Silver iodobromide (average grain size: 0.08 µm) | 0.3 g |
| UV absorber (UV-1) | 0.07 g |
| UV absorber (UV-2) | 0.10 g |
| Additive (HS-1) | 0.2 g |
| Additive (HS-2) | 0.1 g |
| High boiling point solvent (Oil-1) | 0.07 g |
| High boiling point solvent (Oil-3) | 0.07 g |
| Gelatin | 0.8 g |

| Twelfth layer: Second protective layer (PRO-2) | |
|---|---|
| Compound A | 0.04 g |
| Compound B | 0.004 g |
| Polymethyl methacrylate (average grain size: 3 µm) | 0.02 g |
| Copolymer of methyl methacrylate:ethyl methacrylate:methacrylic acid = 3:3:4 (weight ratio) (average grain size: 3 µm) | 0.13 g |
| Gelatin | 0.7 g |

The silver iodobromide emulsion except for one used in the tenth layer was prepared by the following method.

By using a monodispersed silver iodobromide grain having an average grain size of 0.33 µm (silver iodide content: 2 mole %) as a seed crystal, the silver iodobromide emulsions were prepared according to a double jet method.

While Solution ⟨G-1⟩ mentioned below was maintained at a temperature of 70 °C, pAg 7.8 and pH 7.0 and stirred well, a seed emulsion in an amount corresponding to 0.34 mole was added thereto.

(Formation of an inner portion-high iodine content phase -core phase-)

Thereafter, ⟨H-1⟩ and ⟨S-1⟩ mentioned below were added while maintaining a flow ratio of 1 : 1 over 86 minutes at an accelerated flow amount (a flow amount at completion of addition was 3.6-fold to that of an initial flow amount).

(Formation of an outer portion-high iodine content phase -shell phase-)

Subsequently, ⟨H-2⟩ and ⟨S-2⟩ mentioned below were added while maintaining pAg 10.1 and pH 6.0 over 65 minutes with a flow ratio of 1 : 1 and an accelerated flow amount (a flow amount at completion of addition was 5.2-fold to that of an initial flow amount).

During formation of grains, pAg and pH were controlled by using a potassium bromide aqueous solution and a 56 % acetic acid aqueous solution. After formation of grains, the grains were washed according to a conventional flocculation method and then dispersed again by adding gelatin, and pH and pAg were controlled to 5.8 and 8.06, respectively, at 40 °C.

The resulting emulsion was a monodispersed emulsion containing octahedral silver iodobromide grains having an average grain size of 0.80 µm, a distribution width of 12.4 % and a silver iodide content of 8.5 mole %.

| ⟨G-1⟩ | |
|---|---|
| Ossein gelatin | 100.0 g |
| Methanol solution of 10 % by weight Compound-I | 25.0 ml |
| 28 % Aqueous ammonia | 440.0 ml |
| 56 % Acetic acid aqueous solution | 660.0 ml |
| made up to 5000.0 ml with water. | |

| 〈H-1〉 | |
|---|---|
| Ossein gelatin | 82.4 g |
| Potassium bromide | 151.6 g |
| Potassium iodide | 90.6 g |
| made up to 1030.5 ml with water. | |

| 〈S-1〉 | |
|---|---|
| Silver nitrate | 309.2 g |
| 28 % Aqueous ammonia | Equivalent amount |
| made up to 1030.5 ml with water. | |

| 〈H-2〉 | |
|---|---|
| Ossein gelatin | 302.1 g |
| Potassium bromide | 770.0 g |
| Potassium iodide | 33.2 g |
| made up to 3776.8 ml with water. | |

| 〈S-2〉 | |
|---|---|
| Silver nitrate | 1133.0 g |
| 28 % Aqueous ammonia | Equivalent amount |
| made up to 3776.8 ml with water. | |

In the same manner except for changing an average grain size of a seed grain, temperature, pAg, pH, flow amount, addition time and halide composition, the above respective emulsions having different average grain sizes and silver iodide contents were prepared.

All emulsions were core/shell type monodispersed emulsions having a distribution width of 20 % or less. The respective emulsions were subjected to optimum chemical ripening in the presence of sodium thiosulfate, chloroauric acid and ammonium thiocyanate, and a sensitizing dye of 4-hydroxy-6-methyl-1,3,3a,7-tetrazaindene and 1-phenyl-5-mercaptotetrazole were added.

C－1

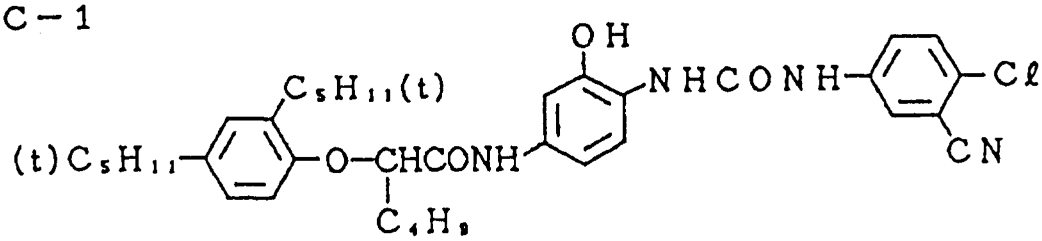

C－2

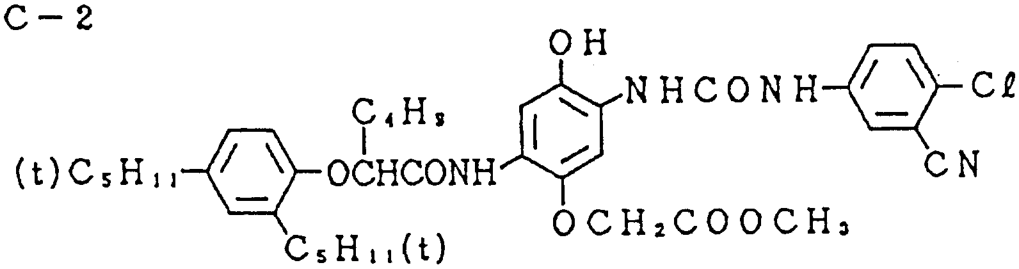

M－1

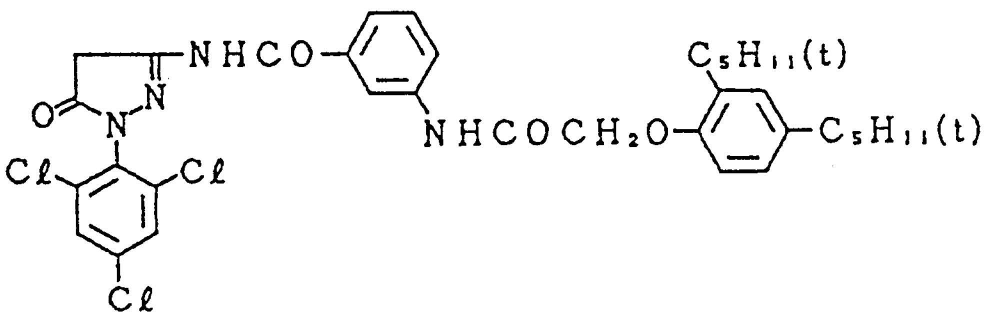

M－2

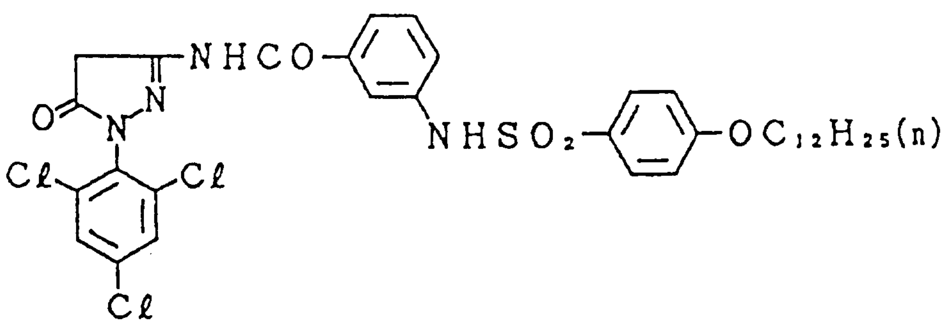

Y－1

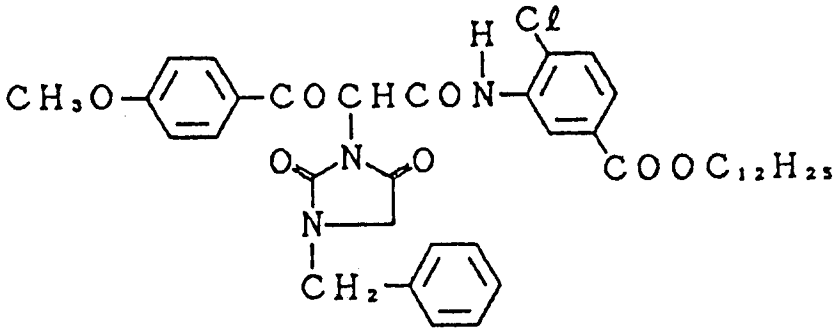

Y－2

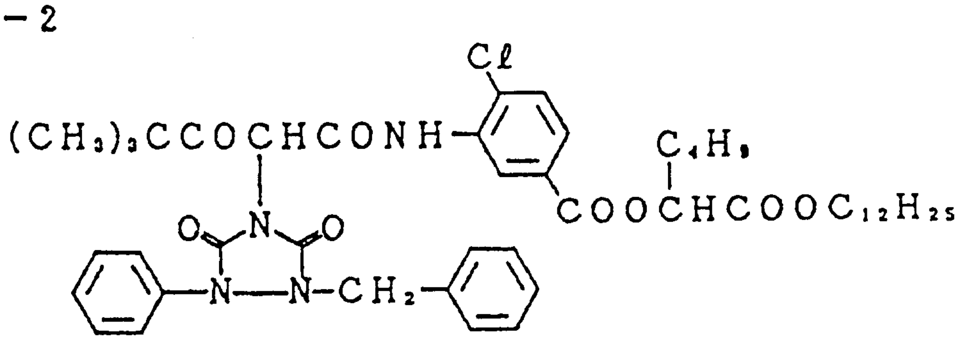

CC－1

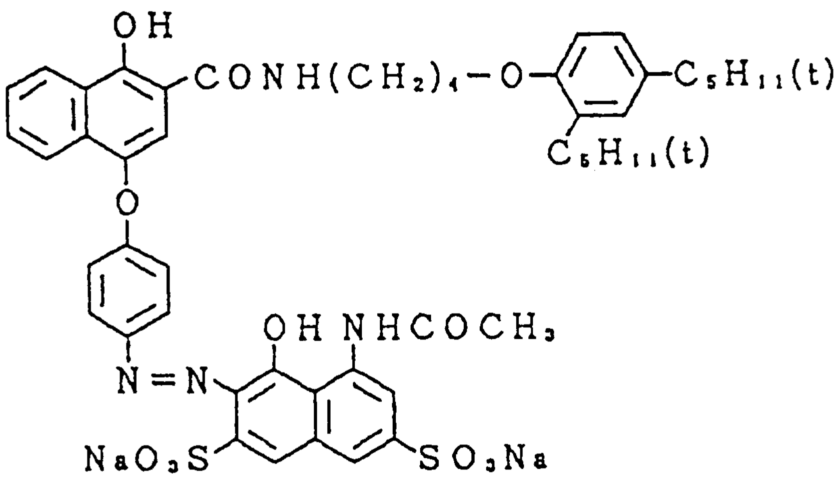

CM-1

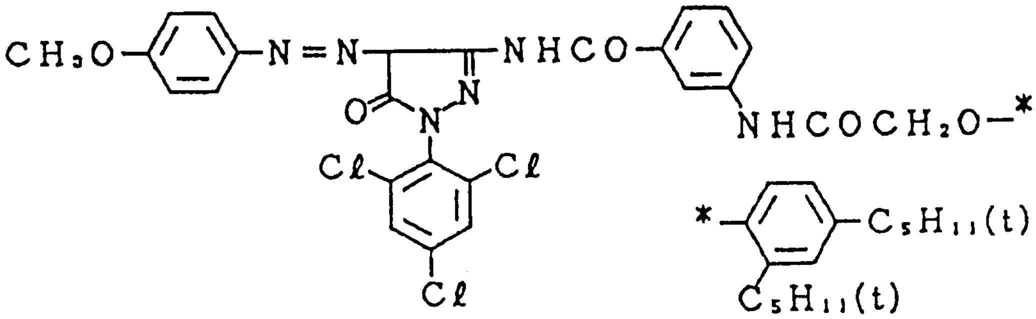

D-1

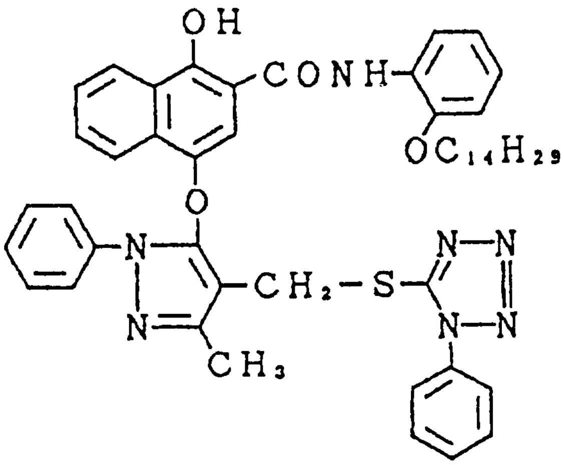

D-2

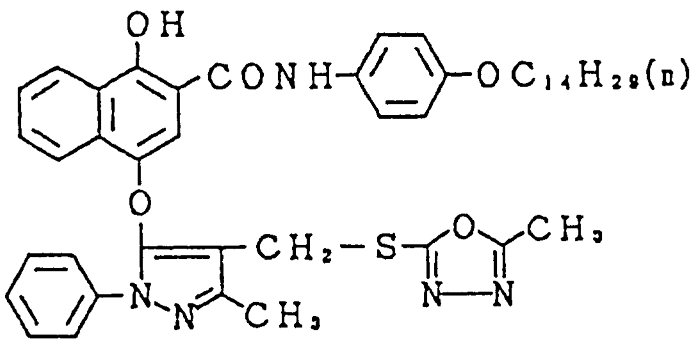

D－3

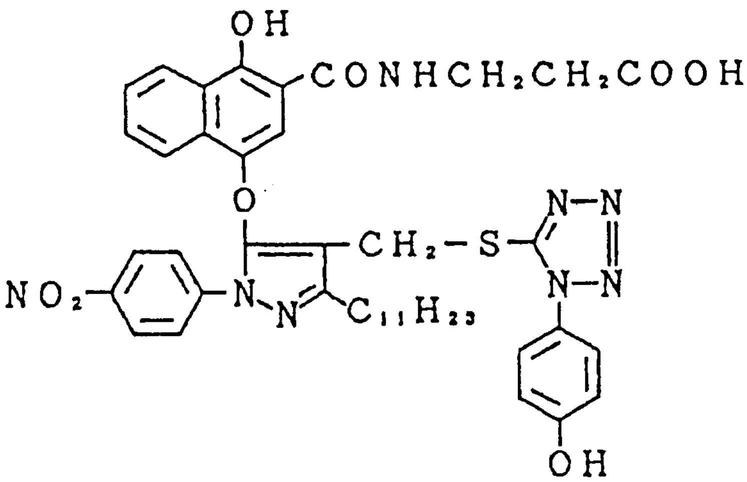

UV－1

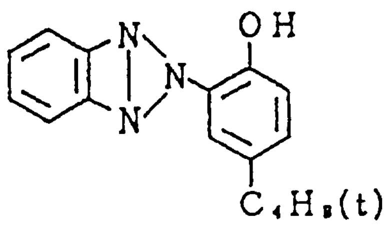

UV－2

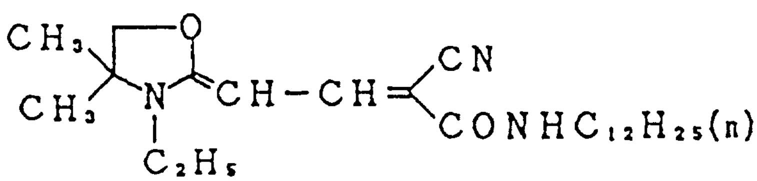

S − 1

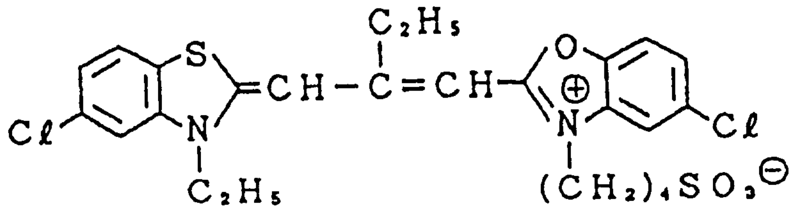

S − 2

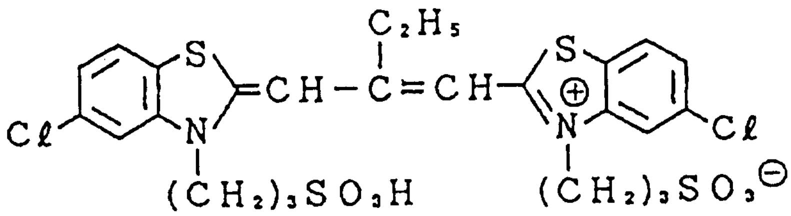

S − 3

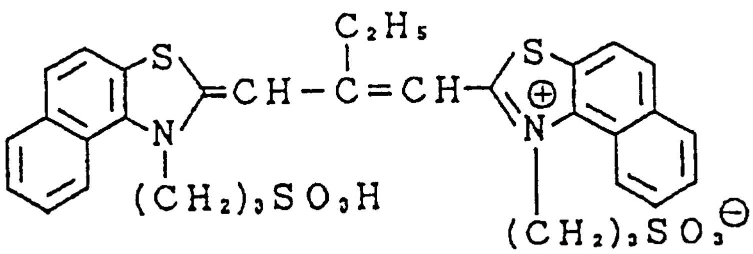

S − 4

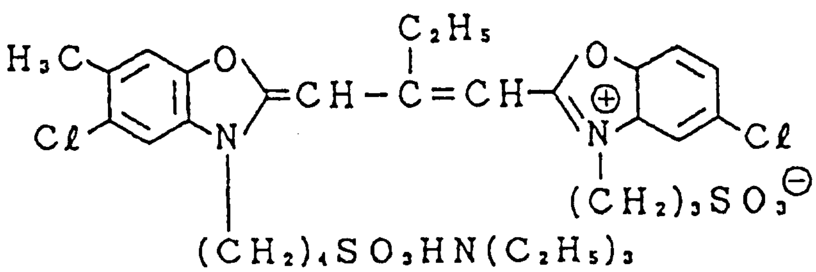

S − 5

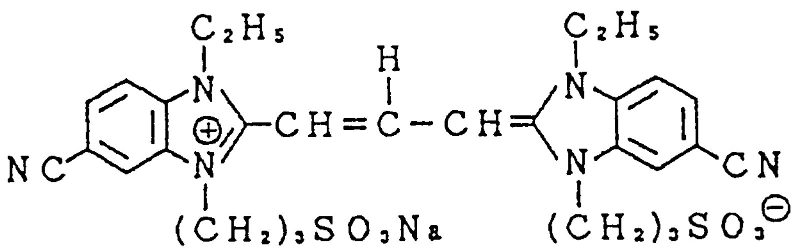

S − 6

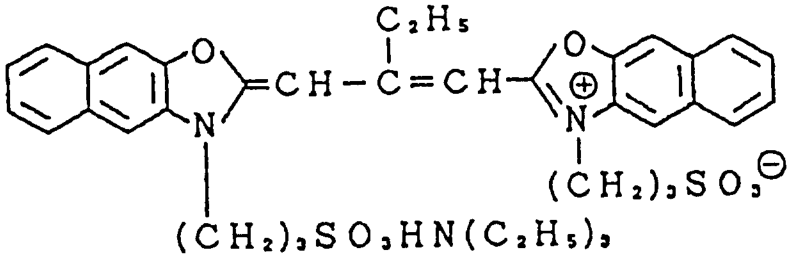

S − 7

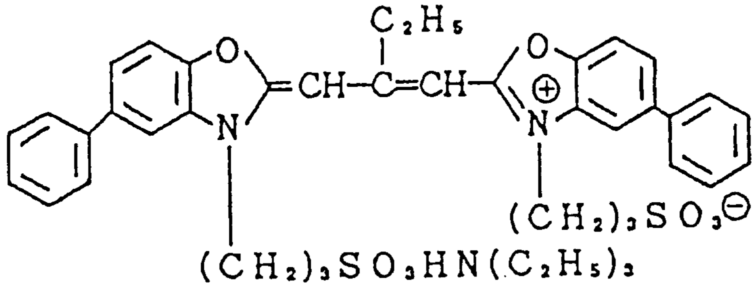

S − 8

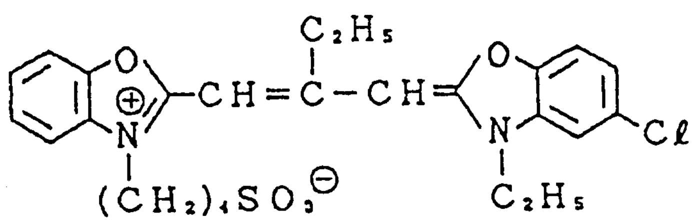

S − 9

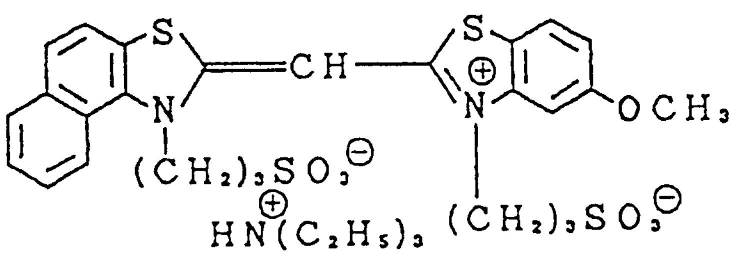

S −10

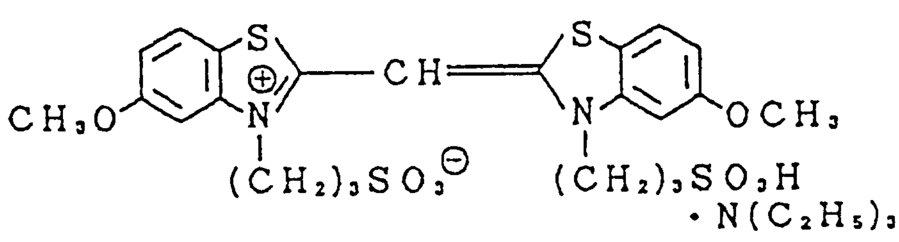

S-11

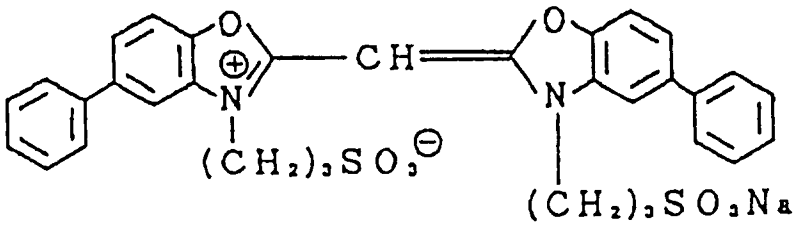

HS-1

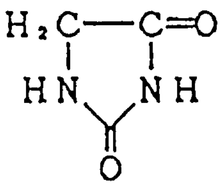

HS-2

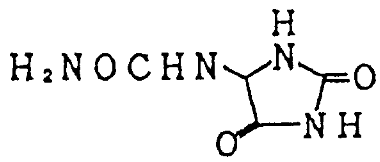

SC-1

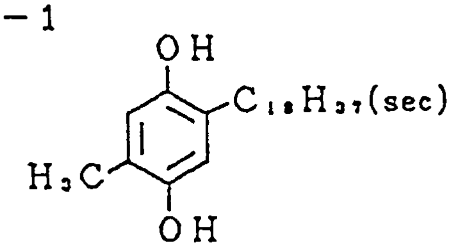

and

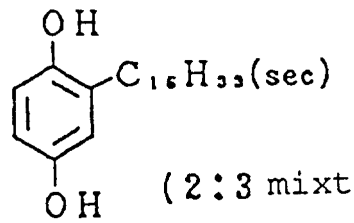

(2:3 mixture)

Oil-1

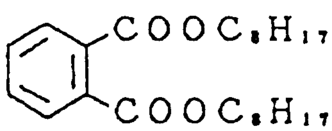

Oil-2

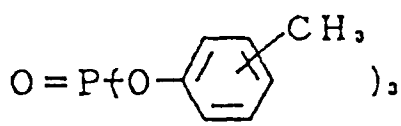

Oil-3

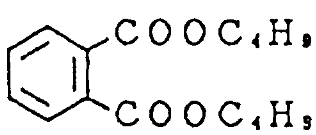

H－1

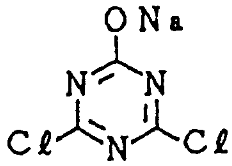

H－2

$(CH_2=CHSO_2CH_2)_2O$

SU－1

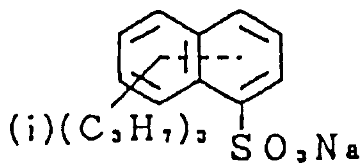

SU－2

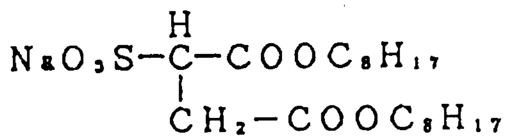

Compound I

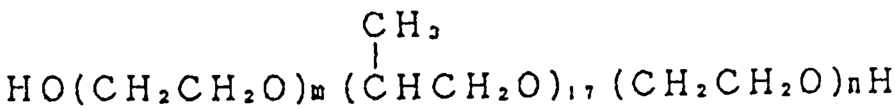

(Average molecular weight ≒ 1300)

AI－1

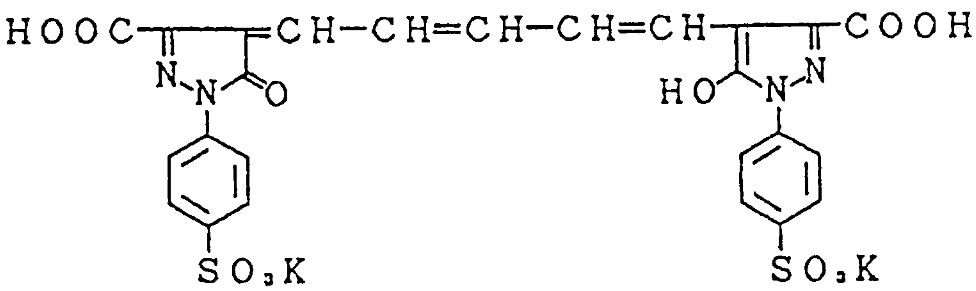

AI－2

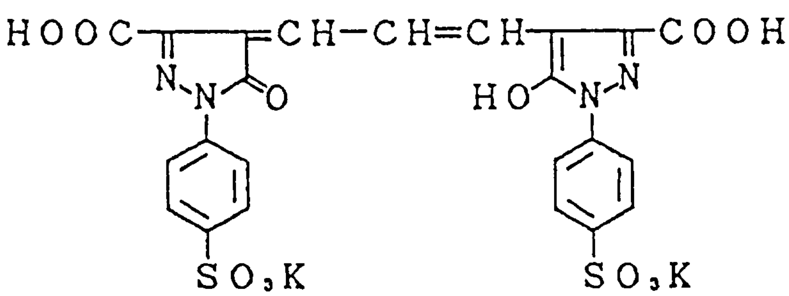

ST-1

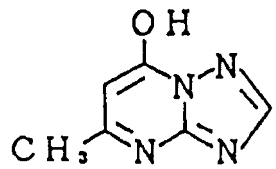

AF-1

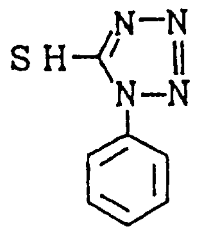

AF-2

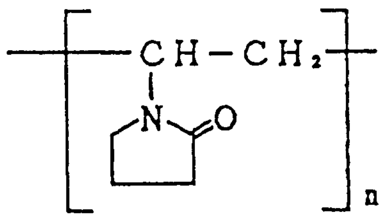

Compound A

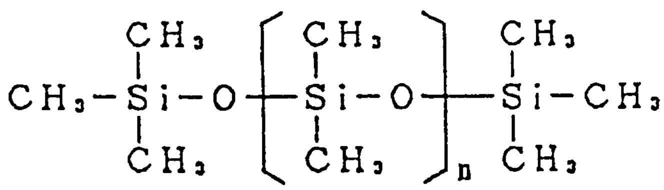

Weight average molecular weight=30,000

Compound B

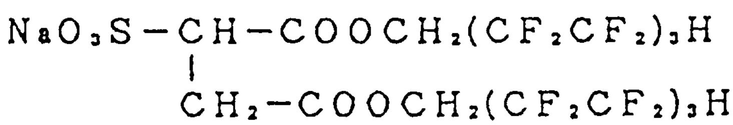

Further, in the light-sensitive materials 101 and 102, Compounds Su-1 and Su-2, a viscosity controller, Hardeners H-1 and H-2, Stabilizer ST-1, Antifoggants AF-1 and AF-2 (having weight average molecular weights of 10,000 and 1,100,000), Dyes AI-1 and AI-2 and Compound DI-1 (9.4 mg/$m^2$) were further contained.

DI-1 (mixture of three components shown below)

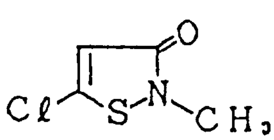

(Component A)

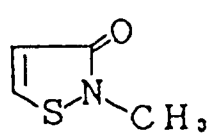

(Component B)

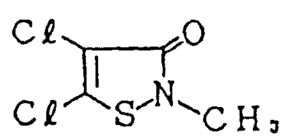

(Component C)

Component A : Component B : Component C = 50 : 46 : 4 (molar ratio)

(3) Evaluation method

For the light-sensitive materials No. 100 to 103 prepared as described above, tear strength was evaluated in the same manner as in Example 1. Further, property for resolving roll set curl was evaluated through processing steps under the following conditions in place of processing in a water bath after heat processing. The results are shown in Table 5.

Processing steps

| Processing steps | Processing time | Processing temperature | Replenishing amount* |
|---|---|---|---|
| Color development | 3 min 15 sec | 38 ± 0.3 °C | 780 ml |
| Bleaching | 45 sec | 38 ± 2.0 °C | 150 ml |
| Fixing | 1 min 30 sec | 38 ± 2.0 °C | 830 ml |
| Stabilizing | 60 sec | 38 ± 5.0 °C | 830 ml |
| Drying | 1 min | 55 ± 5.0 °C | - |

*: the replenished amount is a value per 1 $m^2$ of the light-sensitive material.

The following color developing solution, bleaching solution, fixing solution, stabilizing solution and replenishing solutions thereof were used.

Color developing solution

| | |
|---|---|
| Water | 800 ml |
| Potassium carbonate | 30 g |
| Sodium hydrogen carbonate | 2.5 g |
| Potassium sulfite | 3.0 g |
| Sodium bromide | 1.3 g |
| Potassium iodide | 1.2 mg |
| Hydroxylamine sulfate | 2.5 g |
| Sodium chloride | 0.6 g |
| 4-Amino-3-methyl-N-ethyl-N-(β-hydroxyethyl)aniline sulfate | 4.5 g |
| Diethylenetriaminepentaacetic acid | 3.0 g |
| Potassium hydroxide | 1.2 g |
| made up to 1 liter with addition of water, and adjusted to pH 10.06 by using potassium hydroxide or 20 % sulfuric acid. | |

Color developing replenishing solution

| | |
|---|---|
| Water | 800 ml |
| Potassium carbonate | 35 g |
| Sodium hydrogen carbonate | 3 g |
| Potassium sulfite | 5 g |
| Sodium bromide | 0.4 g |
| Hydroxylamine sulfate | 3.1 g |
| 4-Amino-3-methyl-N-ethyl-N-(β-hydroxyethyl)aniline sulfate | 6.3 g |
| Potassium hydroxide | 2 g |
| Diethylenetriaminepentaacetic acid | 3.0 g |
| made up to 1 liter with addition of water, and adjusted to pH 10.18 by using potassium hydroxide or 20 % sulfuric acid. | |

Bleaching solution

| | |
|---|---|
| Water | 700 ml |
| Iron (III) ammonium 1,3-diaminopropanetetraacetate | 125 g |
| Ethylenediaminetetraacetic acid | 2 g |
| Sodium nitrate | 40 g |
| Ammonium bromide | 150 g |
| Glacial acetic acid | 40 g |
| made up to 1 liter with addition of water, and adjusted to pH 4.4 by using aqueous ammonia or glacial acetic acid. | |

Bleaching replenishing solution

| | |
|---|---|
| Water | 700 ml |
| Iron (III) ammonium 1,3-diaminopropanetetraacetate | 175 g |
| Ethylenediaminetetraacetic acid | 2 g |
| Sodium nitrate | 50 g |
| Ammonium bromide | 200 g |
| Glacial acetic acid | 56 g |
| adjusted to pH 4.0 by using aqueous ammonia or glacial acetic acid, and then made up to 1 liter with addition of water. | |

Fixing solution

| | |
|---|---|
| Water<br>Ammonium thiocyanate<br>Ammonium thiosulfate<br>Sodium sulfite<br>Ethylenediaminetetraacetic acid | 800 ml<br>120 g<br>150 g<br>15 g<br>2 g |
| adjusted to pH 6.2 by using aqueous ammonia or glacial acetic acid, and then made up to 1 liter with addition of water. | |

Fixing replenishing solution

| | |
|---|---|
| Water<br>Ammonium thiocyanate<br>Ammonium thiosulfate<br>Sodium sulfite<br>Ethylenediaminetetraacetic acid | 800 ml<br>150 g<br>180 g<br>20 g<br>2 g |
| adjusted to pH 6.5 by using aqueous ammonia or glacial acetic acid, and then made up to 1 liter with addition of water. | |

Stabilizing solution and stabilizing replenishing solution

| | |
|---|---|
| Water | 900 ml |
| 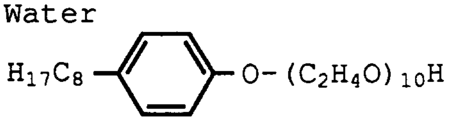 | 2.0 g |
| Dimethylol urea | 0.5 g |
| Hexamethylenetetramine | 0.2 g |
| 1,2-Benzisothiazolin-3-one | 0.1 g |
| Siloxane L-77 (trade name, produced by UCC) | 0.1 g |
| Aqueous ammonia | 0.5 ml |

made up to 1 liter with addition of water, and then adjusted to pH 8.5 by using aqueous ammonia or 50 % sulfuric acid.

By using the above unprocessed light-sensitive materials, brittleness was measured in the manner described below. The results are also shown in Table 5.

〈Brittleness〉

The brittleness was measured under an atmosphere of -15°C by using a wedge-shaped brittleness tester shown in Fig. 1. That is, one end of a sample with a width of 35 mm and a length of 25 cm was fixed to a grip portion 1, bent at a portion 2 and passed through a slit portion 3 with a width of 0.5 mm. Another

end 4 of the film was grasped and drawn quickly in the direction of arrow shown in Fig. 1 at a predetermined rate. The brittleness was evaluated by using the following three standards based on a radius at a bent portion of the film when the film was broken.

○: less than 2 mm
Δ: 2 mm to less than 4 mm
X: 4 mm or more

In the case of a commercially available color film, said radius is 2 to 4 mm so that "○" and "Δ" are preferred.

Comparative example 4

On commercially available triacetic acid cellulose (TAC) films having thicknesses of 120 µm and 100 µm, emulsion layers and backing layers were provided by coating in the same manner as in the above samples No. 100 to No. 103, respectively, to prepare light-sensitive material samples No. 104 and No. 105, and the samples were evaluated in the same manner as in Example 6. The results are shown in Table 5.

Table 5

| | Sample No. | Film thickness of support (µm) | Tear strength | Property for resolving roll set curl | Brittleness[1)] | |
|---|---|---|---|---|---|---|
| | | | | | EC | BC |
| Example 6 | 100 | 85 | ○ | ◎ | Δ | ○ |
| | 101 | 75 | Δ | ◎ | Δ | Δ |
| | 102 | 65 | Δ | ◎ | Δ | Δ |
| | 103 | 55 | Δ | ◎ | ○ | Δ |
| Comparative example 4 | 104 | 120 | X | ◎ | X | Δ |
| | 105 | 100 | X | ◎ | Δ | Δ |

1) EC means that an outer bent surface is an emulsion layer, and BC means that it is a backing layer.

From the results shown in Table 5, it can be seen that when the samples according to the present invention are made thinner, they have more excellent strength and better property for resolving roll set curl than those of TAC (Samples No. 104 and No. 105).

As described above in detail, according to the present invention, there can be provided a light-sensitive silver halide photographic material which can be made thinner because of its strength, has excellent property for resolving roll set curl and is particularly suitable for a miniature camera.

**Claims**

**1.** A support for a photographic material which comprises a copolymerized polyester matrix mainly composed of polyethylene terephthalate,
said copolymerized polyester matrix contains
(i) 1 to 10 mole % of at least one of
(A) an aromatic dicarboxylic acid unit having a metal sulfonate group and
(B) an aromatic diol unit having a metal sulfonate group
based on whole ester bond units and
(ii) 1 to 10 % by weight of (C) a polyalkylene glycol based on said copolymerized polyester matrix (provided that the case where the total amount of (A) and (B) is less than 3 mole % and the amount of (C) is less than 3 % by weight is excluded),
and has an intrinsic viscosity ($\eta$) of 0.40 or more.

**2.** The support of Claim 1 wherein said polyalkylene glycol is polyethylene glycol.

3. The support of Claim 1 wherein said polyalkylene glycol has a number average molecular weight of 600 to 20,000.

4. The support of Claim 1 wherein said polyalkylene glycol has a number average molecular weight of 1,000 to 10,000.

5. The support of Claim 4 wherein said polyalkylene glycol is contained in an amount of 3 to 7 % by weight based on said copolymerized polyester matrix.

6. The support of Claim 1 wherein said aromatic dicarboxylic acid is contained in an amount of 2 to 5 mole % based on the whole acid component.

7. The support of Claim 1 wherein said support has an intrinsic viscosity ($\eta$) of 0.50 to 0.70.

8. The support of Claim 1 wherein the support has a thickness of 50 to 200 $\mu$m.

9. The support of Claim 1 wherein the support has a thickness of 50 to 100 $\mu$m.

10. The support of Claim 1 wherein the support is biaxially stretched at 50 to 140 °C and then thermally fixed at 150 to 240 °C.

11. The support of Claim 1 wherein at least one of the aromatic dicarboxylic acid having a metal sulfonate group and the aromatic diol, and the polyalkylene glycol are added at polycondensation after completion of transesterification.

12. A light-sensitive silver halide photographic material having a support and at least one silver halide emulsion layer provided on at least one side of the support, wherein said support is a support as defined in Claim 1.

Fig. 1

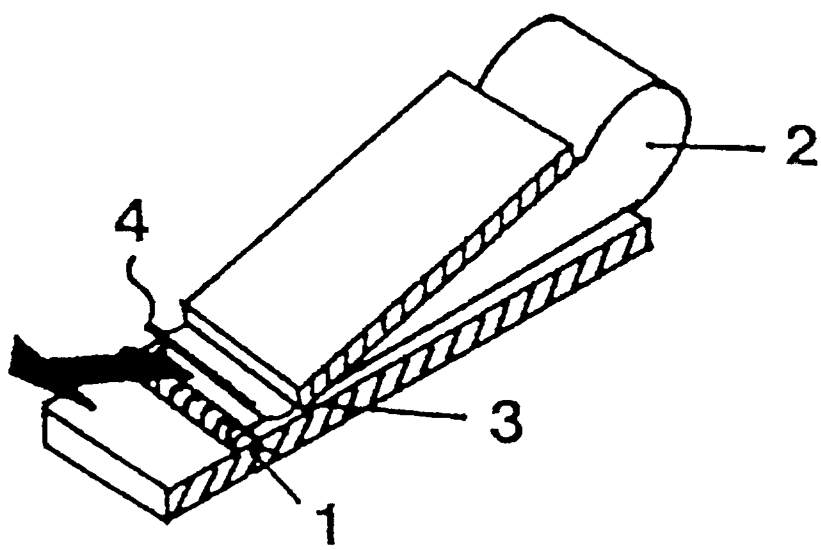

European Patent Office

# EUROPEAN SEARCH REPORT

Application Number

EP 92 12 0753

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 334 367 (FUJI PHOTO FILM CO., LTD.)<br>* page 3, line 30 - line 51 *<br>* page 4, line 58 - page 5, line 5; claims 1-18; example 1 *<br>--- | 1-10,12 | G03C1/795<br>C08G63/68<br>C08G63/66 |
| X | FR-A-2 388 008 (E.I. DU PONT DE NEMOURS AND COMPANY)<br>* claims 1-15 *<br>--- | 1-7,12 | |
| A | US-A-3 052 543 (H. BAUER, A. B. COHEN)<br>* the whole document *<br>--- | 1-12 | |
| A | EP-A-0 172 269 (TOYO BOSEKI KABUSHIKI KAISHA)<br>* page 25, line 22 - line 26; claims 1-3; example 1 *<br>--- | 1-12 | |
| A | PATENT ABSTRACTS OF JAPAN<br>vol. 10, no. 194 (C-358)8 July 1986<br>& JP-A-61 037 815 ( GOOU KAGAKU KOGYO K.K. ) 22 February 1986<br>* abstract *<br>----- | 1 | TECHNICAL FIELDS SEARCHED (Int. Cl.5 )<br>G03C<br>C08G |

The present search report has been drawn up for all claims

| Place of search | Date of completion of the search | Examiner |
|---|---|---|
| THE HAGUE | 24 FEBRUARY 1993 | HINDIAS E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)